# EUROPEAN PATENT SPECIFICATION

(11) **EP 0 539 931 B1**
(45) Date of publication and mention of the grant of the patent: **22.04.1998**
(21) Application number: 92118405.7
(22) Date of filing: 28.10.1992
(51) Int. Cl.: G03C 3/00, B65D 85/672, G03B 17/26

(54) **Light-tight package and packaging method for photosensitive web roll**
Lichtdichte Verpackung und Verpackungsverfahren für photoempfindliche Wickelrolle
Emballage étanche à la lumière et procédé pour emballer une bobine de bande photosensible

(30) Priority: 30.10.1991 US 784848; 30.10.1991 US 784854
(43) Date of publication of application: 05.05.1993
(73) Proprietor: EASTMAN KODAK COMPANY, Rochester, New York 14650-2201 (US)
(72) Inventor: Chase, Gregory Allan, c/o Eastman Kodak Company, Rochester, New York 14650-2201 (US); Faulstick, Luke Titus, c/o Eastman Kodak Company, Rochester, New York 14650-2201 (US); Koelsch, Michael Leroy, c/o Eastman Kodak Company, Rochester, New York 14650-2201 (US)
(74) Representative: Blickle, K. Werner, Dipl.-Ing.

(56) References cited:
- EP-A- 0 350 093
- US-A- 4 148 395
- US-A- 4 505 387

## Description

### BACKGROUND OF THE INVENTION

### Field of the Invention

The present invention relates generally to packages for photosensitive material, and particularly to a package and packaging method for light-tightly enclosing and dispensing a roll of photosensitive web material.

### Description of the Prior Art

Currently, roll film and paper are packaged for roomlight loading into cooperating apparatus in two basic configurations. One utilizes plastic end plugs for light-shielding the roll ends together with an opaque plastic leader that is wrapped circumferentially around the roll and then withdrawn after the roll has been placed in a light-safe environment. Because those end plugs increase the roll axial length, it has been necessary to modify certain using apparatus in order to accommodate the increased length. Such modification has proven inconvenient and costly to the user. The other configuration, described in U.S. Patent No. 4,911,299, avoids use of end plugs by instead utilizing thin, flexible, disk-shaped end covers that are folded and heat-sealed to both the roll core ends and a laminated-plastic circumferential wrapper, the wrapper then being torn away from its end-cover seals after the roll has been secured in a light-safe environment. This approach avoids modifying the using apparatus, but the folding and sealing steps required in the packaging process are complex and costly to the manufacturer.

The US-A-4,148,395 also discloses a package of rolled photosensitive material comprising a light shielding leader attached to a photosensitve web which is wound around a core wherein pheripheral lips of the light-tight flanges are overlaying a part of the leader. They are secured to the leader by an adhesive. However, such an adhesive should be avoided during the packaging process.

There has thus existed a need for a simpler, more practical, efficient, economical, and convenient alternative to the foregoing configurations, preferably such an alternative that obviates any modification of using apparatus and, as well, any sealing of a circumferential cover element to another part of the package, thereby benefiting both the user and the manufacturer.

### SUMMARY OF THE INVENTION

The primary object of this invention has been to meet the above need. That object and others have been achieved by the invention herein disclosed and claimed.

This invention finds utility in a package for light-tightly enclosing a roll of photosensitive material, and adapted to be readily opened to dispense such material in cooperating apparatus. The roll includes an elongate photosensitive web of predetermined width that is wound longitudinally about a hollow cylindrical core and terminates in an outermost end thereof. The web so wound about the core defines both diametral and circumferential dimensions of the roll and circumferential and opposite end surfaces thereof. The core has opposite open ends defining an axial length therebetween that is substantially equal to the web predetermined width. Each of the core ends has an inner diameter that defines an inner circumferential surface extending axially inwardly from that end.

The package comprises a flexible opaque leader having (1) leading and trailing ends that define a longitudinal length therebetween equal to at least twice the roll circumferential dimension, (2) opposite lateral edges that define a leader width therebetween substantially equal to the web predetermined width, (3) opposite lateral marginal portions that extend longitudinally along, and inwardly of, the opposite lateral edges respectively, and (4) a medial portion that extends longitudinally between the lateral marginal portions. The leader trailing end is joined to the web outermost end, and the leader is then wound longitudinally about the roll circumferential surface through at least first and second convolutions thereof commencing at its trailing end and terminating at its leading end. The leader lateral marginal portions each have a recess therein that extends inwardly from the adjacent one of the leader lateral edges, each recess being spaced longitudinally from the leader trailing end by substantially the roll circumferential dimension. The recess in each lateral marginal portion is thus located circumferentially at a site where the first and second leader convolutions end and begin respectively.

The package further comprises a pair of foldable disk-shaped end caps that are adapted to cover the roll opposite end surfaces respectively. Each of the end caps includes a central round opening therein, with a diameter less than the core inner diameter, and an annular opaque cover element that surrounds the opening and extends radially outwardly therefrom to a circular periphery having a diameter greater than the roll diametral dimension. Each cover element includes both an inner annular marginal portion, which extends radially outwardly from the opening to an extent substantially commensurate with the core inner diameter, and an outer annular marginal portion, which extends radially inwardly from the periphery to an extent substantially commensurate with the roll diametral dimension.

Each of the end caps is placed in substantially concentric covering relation to a respective one of the roll opposite end surfaces. The inner annular marginal portion of each end cap cover element is folded axially inwardly inside the adjacent core end and then sealed to the inner circumferential surface at that end. The outer annular marginal portion of each end cap cover element is first folded axially inwardly of the adjacent roll end surface and then folded radially inwardly upon the adjacent lateral marginal portion of the first leader convolution. The recesses in both lateral marginal portions provide the clearance needed for the leader medial portion therebetween to pass between the folded outer annular marginal portions at the aforementioned site where the first and second leader convolutions end and begin respectively. The lateral marginal portions of the second leader convolution are then wound upon the folded outer annular marginal portions. The folded outer annular marginal portions of both end cap cover elements are thus light-tightly secured between the lateral marginal portions of the first and second leader convolutions.

In another embodiment of the invention, a method of light-tight packaging a photosensitive web material, comprises the steps of:
providing a flexible opaque leader having (1) leading and trailing ends that define a longitudinal dimension therebetween equal to at least twice the roll circumferential dimension, (2) opposite lateral edges that define a leader width therebetween substantially equal to the web predetermined width, (3) opposite lateral marginal portions that extend longitudinally along, and inwardly of, the opposite lateral edges respectively, and (4) a medial portion that extends longitudinally between the lateral marginal portions;
providing in each of the lateral marginal portions a recess that extends inwardly from the adjacent one of the lateral edges and that is spaced longitudinally from the trailing end by substantially the roll circumferential dimension;
joining the trailing end to the web outermost end;
winding a first stretch of the leader longitudinally about the roll circumferential surface through a first convolution of the leader which begins at its trailing end and ends at the recesses in its lateral marginal portions, leaving a second stretch of the leader as yet unwound;
providing a pair of foldable, disk-shaped, opaque end caps that are adapted to cover the roll opposite end surfaces respectively, each of the end caps including a central round opening therein, with a diameter less than the core inner diameter, and an annular opaque cover element that surrounds the opening and extends radially outwardly therefrom to a circular periphery, with a diameter greater than the roll diametral dimension, the cover element having both an inner annular marginal portion, which extends radially outwardly from the opening to an extent substantially commensurate with the core inner diameter, and an outer annular marginal portion, which extends radially inwardly from the periphery to an extent substantially commensurate with the roll diametral dimension;
placing each of the end caps in substantially concentric covering relation to a respective one of the roll opposite end surfaces;
folding the inner annular marginal portion of each end cap cover element axially inwardly inside the adjacent core end and then sealing that portion, so folded, to the inner circumferential surface of that end;
folding the outer annular marginal portion of each end cap cover element axially inwardly of the adjacent roll end surface and then radially inwardly upon the adjacent lateral marginal portion of the first leader convolution, the recesses in both lateral marginal portions providing sufficient clearance for the leader medial portion therebetween to pass between the folded outer annular marginal portions of both end cap cover elements at a circumferential point where the first leader convolution ends; and
winding the as-yet-unwound second stretch of the leader longitudinally about the folded outer annular marginal portions, and the first leader convolution medial portion therebetween, through a second convolution of the leader beginning at the recesses and ending a circumferential distance therebeyond equal to at least the roll circumferential dimension;
whereby the folded outer annular marginal portions of both end cap cover elements are light-tightly secured between respective lateral marginal portions of the first and second leader convolutions.

This invention, and its objects and advantages, will become more apparent in the detailed description of its preferred embodiment presented hereinbelow.

### BRIEF DESCRIPTION OF THE DRAWINGS

In the detailed description of the preferred embodiment of this invention presented below, reference is made to the accompanying drawings, wherein like reference characters denote like elements, and wherein:
Fig. 1 is a perspective view of a photosensitive web roll, showing partially fragmented and broken-away components of a light-tight package according to this invention in an early stage of their application to the roll;
Fig. 1A is a plan view showing details of one of the package components before its application to the roll;
Figs. 2-6 are partial perspective views of the web roll and package components shown in Fig. 1, illustrating portions of those components in succeeding stages of their application to the roll; and
Fig. 7 is a perspective view of the web roll and package components shown in Figs. 1-6, depicting the roll as light-tightly enclosed by those components when fully applied thereto, and further depicting the packaged roll as supported by a pair of hub members in an open-topped container with a mating cover positioned thereover to close the container.

### DESCRIPTION OF THE PREFERRED EMBODIMENT

Because certain parts of, and method of making photosensitive web roll packages are well known, the following description is directed in particular to those elements and method steps forming, cooperating directly with, or relating to, this invention. Elements and steps not specifically shown or described herein are selectable from those known in the relevant art.

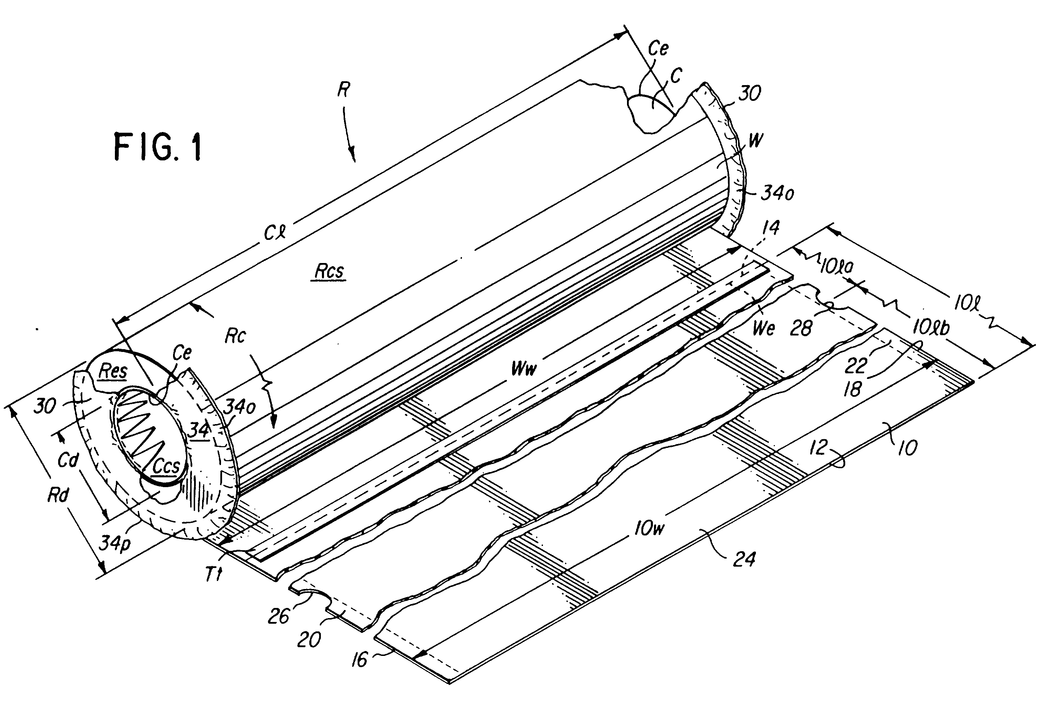

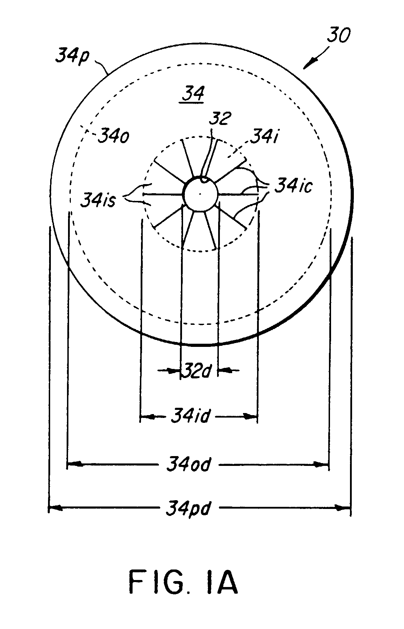

Fig. 1 illustrates a roll R of an elongate photosensitive web W of predetermined width Ww that is wound longitudinally about a hollow cylindrical core C and terminates in an outermost end We thereof. The web so wound about the core defines both diametral and circumferential dimensions Rd and Rc of the roll and circumferential and opposite end surfaces Rcs and Res thereof. The core has opposite open ends Ce defining an axial length Cℓ therebetween that is substantially equal to the web predetermined width Ww. Each of the core ends has an inner diameter Cd that defines an inner circumferential surface Ccs extending axially inwardly from that end.

Joined to the web outermost end We by an adhesive tape Tt is a flexible opaque leader 10 having leading and trailing ends 12 and 14 that define a longitudinal dimension 10ℓ therebetween equal to at least twice the roll circumferential dimension Rc. Leader 10 also has opposite lateral edges 16 and 18 that define a leader width 10w therebetween substantially equal to the web predetermined width Ww. Included in leader 10 are opposite lateral marginal portions 20 and 22 that extend longitudinally along, and transversely inwardly of, the opposite lateral edges 16 and 18, respectively, and a medial portion 24 that extends longitudinally along, and transversely between, the lateral marginal portions 20 and 22.

Provided in the leader lateral marginal portions 20 and 22 are recesses, or notches, 26 and 28 that extend transversely inwardly from lateral edges 16 and 18, respectively, and that are spaced longitudinally from leader trailing end 14 by a first stretch 10ℓa of the leader substantially equal in length to the roll circumferential dimension Rc. It will be noted that leader trailing end 14 is where leader 10 is joined by tape Tt to the web outermost end We.

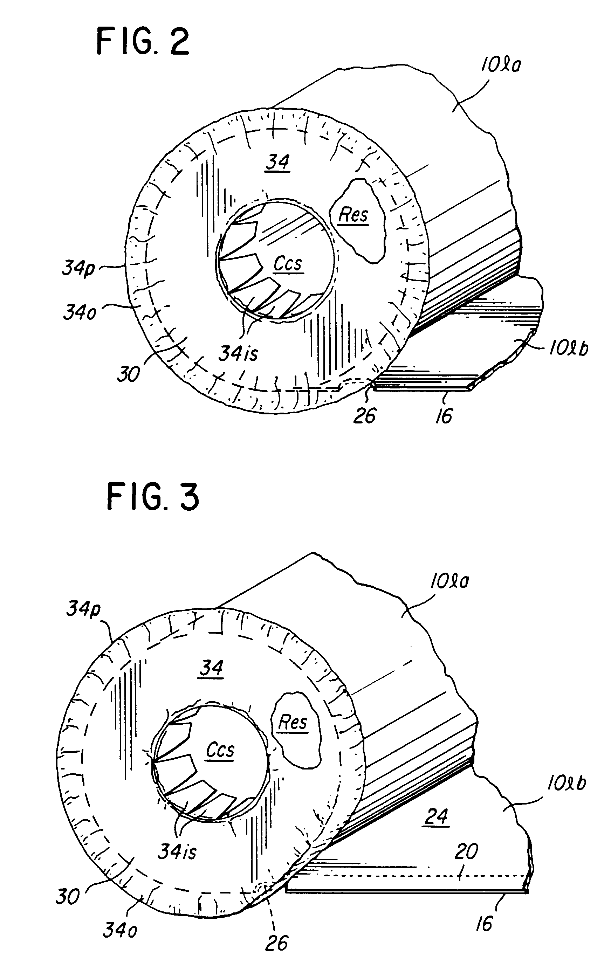

That first stretch 10ℓa of leader 10 is wound longitudinally about the roll circumferential surface Rcs through a first leader convolution which begins at trailing end 14 and ends at recesses 26 and 28, leaving a second stretch 10ℓb of the leader as yet unwound, as illustrated in Fig. 2.

Covering the roll opposite end surfaces Res are a pair of identical, readily foldable, disk-shaped, opaque end caps 30. As depicted in Fig. 1A, each end cap 30 includes a central round opening 32 therein, with a diameter 32d less than the core inner diameter Cd, and an annular opaque cover element 34 that surrounds opening 32 and extends radially outwardly therefrom to a circular periphery 34p having a diameter 34pd greater than the roll diametral dimension Rd. Cover element 34 includes both an inner annular marginal portion 34i, which extends radially outwardly from opening 32 to an extent defined by an outer diameter 34id that is substantially commensurate with the core inner diameter Cd, and an outer annular marginal portion 34o, which extends radially inwardly from periphery 34p to an extent defined by an inner diameter 34od that is substantially commensurate with the roll diametral dimension Rd.

Referring back to leader 10, the lateral marginal portions 20 and 22 thereof can now be defined more particularly as extending inwardly from adjacent lateral edges 16 and 18, respectively, by an amount at least as great as the radial extent, or width, of the end cap cover element outer annular marginal portion 34o, i.e., at least 1/2 (34pd-34od). And the recesses 26 and 28 in leader 10 can accordingly be defined as extending inwardly from edges 16 and 18 through the lateral marginal portions 20 and 22, respectively, at least to the medial portion 24 therebetween. That is to say, the recesses 26 and 28 extend inwardly from adjacent lateral edges 16 and 18, respectively, by an amount at least as great as, preferably slightly greater than, the radial extent, or width, of the outer annular marginal portion 34o, i.e., ≥ 1/2 (34pd-34od).

Each of the end caps 30 is placed in substantially concentric covering relation to a respective one of the roll opposite end surfaces Res. The inner annular marginal portion 34i of each end cap cover element 34 is folded axially inwardly inside the adjacent core end Ce and then sealed, preferably heat-sealed, to the inner circumferential surface Ccs of that end. Each inner annular marginal portion 34i is provided with means for facilitating such folding and sealing. The facilitating means may include a plurality of substantially radial lines of weakness in portion 34i, such as lines of cleavage 34ic which divide that portion into a plurality of separately foldable and sealable segments 34is, as shown in Fig. 1A Preferably, such lines of cleavage are die-cut through portion 34i.

As illustrated in Fig. 3, the outer annular marginal portion 34o of each end cap cover element 34 is folded axially inwardly of the adjacent roll end surface Res and then radially inwardly upon the adjacent lateral marginal portion 20 or 22 of the aforementioned first leader convolution. The recesses 26 and 28 in both lateral marginal portions 20 and 22 provide sufficient clearance for the leader medial portion 24 therebetween to pass freely between the folded outer annular marginal portions 34o of both end cap cover elements 34 at a circumferential point where the first leader convolution ends.

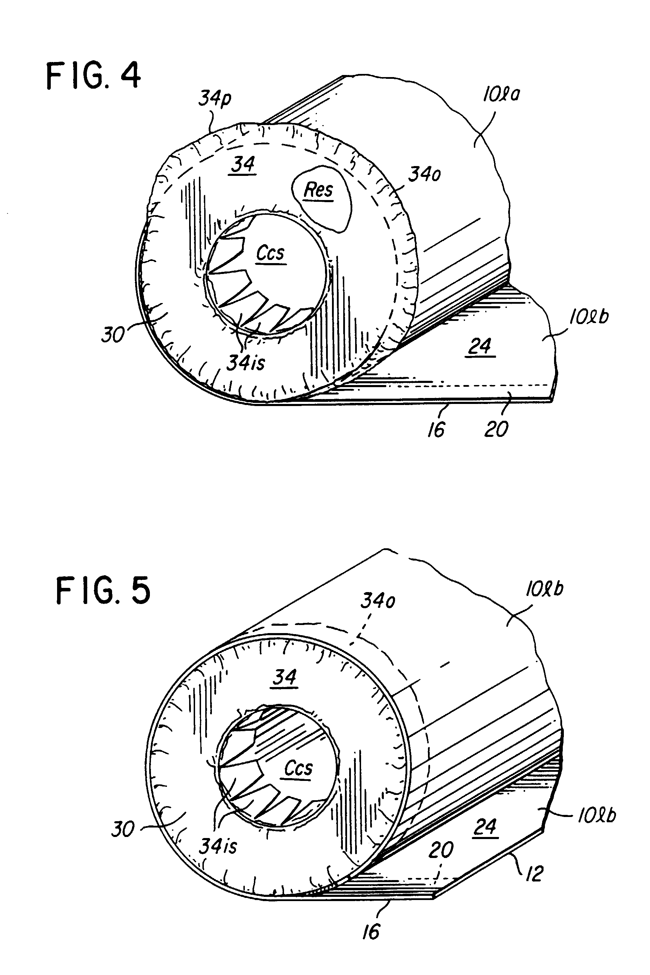

As depicted in Fig. 4, the aforementioned as-yet-unwound second stretch 10ℓb of leader 10 is then wound longitudinally about the folded end cap cover element outer annular marginal portions 34o, and the first leader convolution medial portion 24 therebetween, through a second leader convolution beginning at the recesses 26 and 28 and ending a circumferential distance therebeyond equal to at least the roll circumferential dimension Rc.

As indicated in Fig. 5, the folded outer annular marginal portions 34o of both end cap cover elements 34 are thus light-tightly secured between the respective lateral marginal portions 20 and 22 of the first and second leader convolutions.

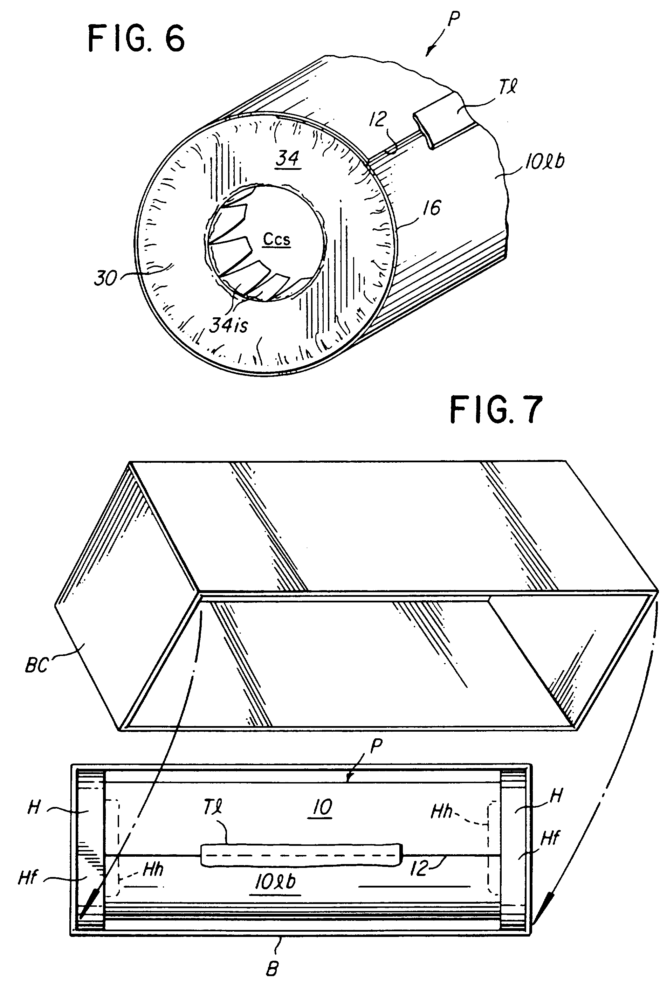

With the leader fully wound about the roll, as shown in Fig. 6, its leading end 12 is then removably secured, e.g., by adhesive tape Tℓ, to an adjacent portion of the second leader convolution.

The resulting package P, light-tightly enclosing roll R, is partially shown in Fig. 6 and fully shown in Fig. 7. In Fig. 7, the packaged roll is shown supported by a pair of hub members H having hubs Hh inserted into the roll core open ends and hub flanges Hf snuggly nested in an open-topped rectanguloid box B, with a mating box cover BC positioned thereover to close the box for shipping, handling, and/or storage.

In use, after removing package P from its shipping box and positioning it in a light-tight cassette (not shown) for use in cooperating apparatus, e.g., image-setting apparatus, the user, having removed the tape Tℓ and threaded the leader leading end through the cassette exit slot, simply pulls the leader completely out of the cassette, removes the tape Tt, and discards the leader. In the process of pulling the leader out, the leader is withdrawn tangentially from the roll as its outer and inner convolutions are unwound. Since no part of the leader is sealed to the end caps, the folded end cap cover element outer annular marginal portions 34o are simply unfolded radially outwardly as the leader inner convolution is unwound and pulled away. The thus-unfolded end cap portions 34o remain unfolded as the photosensitive web W is withdrawn from the roll.

It will now be appreciated that the aforementioned object of this invention has been achieved by fulfilling the stated need therefor, and by providing the following benefits vis-a-vis the prior art:
For the Manufacturer -
   (a) Faster, more efficient production, with no heat-sealing of the leader required; and
   (b) Greater production flexibility, as no new hardware is required to light-seal a roll of different diameter, because of the variability allowed in the amount of end cap material (portion 34o) that must be folded over the roll ends to provide a light-tight fold/wrap.
For the User -
   (a) No need for equipment modification to accommodate this package, because the increase in axial length is minimal; and
   (b) As a result of greater manufacturing flexibility noted above, more roll-product formats can be offered in shorter time periods, giving the user more product options and faster response times.

Although the present invention has been described with particular reference to its preferred embodiment illustrated herein, it will nonetheless be understood by those skilled in the pertinent art that variations and modifications thereof can be effected within the scope of this invention as defined by the claims set forth below.

## Claims

1. A package for light-tightly enclosing a roll(R) of photosensitive material(W) and adapted to be readily opened to dispense such material in cooperating apparatus, said roll(R) including an elongate photosensitive web(W) of predetermined width(Ww) wound longitudinally about a hollow cylindrical core(C) and terminating in an outermost end(We) thereof, said web so wound about said core(C) defining diametral and circumferential dimensions(Rd/Rc) and circumferential and opposite end surfaces(Rcs,Res) of said roll, said core having opposite open ends(Ce) defining an axial length(C1) therebetween substantially equal to said web predetermined width(Ww), each of said core ends having an inner diameter(Cd) defining an inner circumferential surface(Ces) extending axially inwardly therefrom, wherein
a flexible opaque leader(10) having leading and trailing ends (12,14) defining a longitudinal length(101) therebetween equal to at least twice said roll circumferential dimension(Rc), and having opposite lateral edges(16,18) defining a leader width(10w) therebetween substantially equal to said web(W) predetermined width(Ww), said leader(10) having opposite lateral marginal portions(20,22) extending longitudinally along and inwardly of said opposite lateral edges(16,18), respectively, and a medial portion(24) extending longitudinally between said lateral marginal portions(20,22), said leader trailing end(14) being joined to said web outermost end(We), said leader(10) being wound longitudinally about said roll circumferential surface(Rcs) through at least first and second convolutions thereof commencing at said trailing end(14) and terminating at said leading end(12), said leader lateral marginal portions(20,22) each having a recess(26,28) extending inwardly therein from the adjacent one of said leader lateral edges(16,18) and spaced longitudinally from said leader trailing end(14) by substantially said roll circumferential dimension(Rc), so that said recess(26,28) in each of said lateral marginal portions(20,22) is located circumferentially at a site where said first and second leader convolutions end and begin respectively;
a pair of foldable disk-shaped end caps(30) which are adapted to cover said roll opposite end surfaces respectively, each of said end caps(30) including a central round opening(32) with a diameter(32d) less than said core inner diameter(Cd) and an annular opaque cover element(34) surrounding said opening(32), said cover element(34) extending radially outwardly from said opening to a circular periphery(34p) having a diameter(34pd) greater than said roll diametral dimension(Rd), said cover element(34) having an inner annular marginal portion(34i) extending radially outwardly from said opening(32) to an extent substantially commensurate with said core inner diameter(Cd) and an outer annular marginal portion (34o) extending radially inwardly from said periphery(34p) to an extent substantially commensurate with said roll diametral dimension(Rd);
each of said end caps(30) being placed in substantially concentric covering relation to a respective one of said roll opposite end surfaces(Res), with said inner annular marginal portion(34i) of each end cap cover element(34) folded axially inwardly inside a respective one of said core ends(Ce) and sealed to said inner circumferential surface(Ces) thereof, said outer annular marginal portion(34o) of each end cap cover element(34) being folded axially inwardly of a respective one of said roll end surfaces(Res) and radially inwardly upon the adjacent one of said leader lateral marginal portions(20,22) of said first leader convolution, said recess(26,28) in each of said lateral marginal portions(20,22) providing requisite clearance for said leader medial portion(24) to pass between said folded outer annular marginal portions(34o) at said site where said first and second leader convolutions end and begin respectively, thereby permitting said lateral marginal portions(34o) of said second leader convolution to be wound upon said folded outer annular marginal portions(34o), whereby said folded outer annular marginal portions of said end cap cover elements(34) are light-tightly secured between said lateral marginal portions(20,22) of said first and second leader convolutions.

2. A package as claimed in Claim 1 characterized in that each lateral marginal portion(20,22) of said leader(10) extends inwardly from said adjacent lateral edge(16,18) by an amount at least as great as the radial extent of said outer annular marginal portion(34o) of each end cap cover element(34).

3. A package as claimed in Claim 1 characterized in that said recess(26,28) in each lateral marginal portion(20,22) extends inwardly from said lateral edge(16,18) by an amount greater than the radial extent of said outer annular marginal portion(34o) of each end cap cover element(34).

4. A package as claimed in Claim 1 characterized in that said inner annular marginal portion(34i) of each end cap cover element(34) includes means for facilitating folding that portion axially inwardly inside one of said core ends(Ce) and sealing that portion to said inner circumferential surface(Rcs) thereof.

5. A package as claimed in Claim 1 characterized in that comprising means for removably securing the leading end(12) of said leader(10) to an adjacent portion of said second leader convolution.

6. A method for light-tightly enclosing a roll(R) of photosensitive material(W) in a package that may be readily opened to dispense such material in cooperating apparatus, said roll including an elongate photosensitive web of predetermined width(Ww) wound longitudinally about a hollow cylindrical core(C) and terminating in an outermost end(We) thereof, said web so wound about said core(C) defining diametral and circumferential dimensions(Rd/Rc) and circumferential and opposite end surfaces(Rcs,Res) of said roll, said core having opposite open ends(Ce) defining an axial length(Cl) therebetween substantially equal to said web predetermined width(Ww), each of said core ends having an inner diameter(Cd) defining an inner circumferential surface(Ces) extending axially inwardly therefrom, the method comprises the steps :
providing a flexible opaque leader(10) having leading and trailing ends(12,14) defining a longitudinal dimension(10e) therebetween equal to at least twice said roll circumferential dimension(Rc), and having opposite lateral edges(16,18) defining a leader width(10w) therebetween substantially equal to said web predetermined width(Ww), said leader(10) having opposite lateral marginal portions(20,22) extending longitudinally along and inwardly of said opposite lateral edges(16,18), respectively, and a medial portion(24) extending longitudinally between said lateral marginal portions(20,22);
providing in each of said lateral marginal portions(20,22) a recess(26,28) extending inwardly from the adjacent one of said lateral edges(16,18) and spaced longitudinally from said trailing end(14) by substantially said roll circumferential dimension(Rc);
joining said trailing end(14) to said web outermost end (We);
winding a first stretch(10eo) of said leader(10) longitudinally about said roll circumferential surface(Rcs) through a first convolution of said leader beginning at said trailing end(14) and ending at said recesses(26,28) in said lateral marginal portions(20,22), leaving a second stretch(10eo) of said leader(10) as yet unwound;
providing a pair of foldable, disk-shaped, opaque end caps(30) adapted to cover said roll opposite end surfaces(Res) respectively, each of said end caps(30) including a central round opening(32) with a diameter(32d) less than said core inner diameter (Cd) and an annular opaque cover element(34) surrounding said opening(32) and extending radially outwardly therefrom to a circular periphery(34p) with a diameter(34pd) greater than said roll diametral dimension(Rd), said cover element(34) having an inner annular marginal portion(34i) extending radially outwardly from said opening(32) to an extent substantially commensurate with said core inner diameter(Cd) and an outer annular marginal portion(340) extending radially inwardly from said periphery(34p) to an extent substantially commensurate with said roll diametral dimension(Rd);
placing each of said end caps(30) in substantially concentric covering relation to a respective one of said roll opposite end surfaces(Res);
folding said inner annular marginal portion(34i) of each end cap cover element(34) axially inwardly inside a respective one of said core ends(Ce) and sealing that portion, so folded, to said inner circumferential surface(Ces) thereof;
folding said outer annular marginal portion(340) of each end cap cover element(34) axially inwardly of a respective one of said roll end surfaces(Res) and radially inwardly upon the adjacent one of said leader lateral marginal portions(20,22) of said first leader convolution, said recesses(26,28) in said lateral marginal portions(20,22) providing requisite clearance for said leader medial portion(24) therebetween to pass between said folded outer annular marginal portions(340) where said first leader convolution ends; and
winding said second stretch(10eo) of said leader(10) longitudinally about said folded outer annular marginal portions(340), and said first leader convolution medial portion(24) therebetween, through a second convolution of said leader beginning at said recesses(26,28) and ending a circumferential distance therebeyond equal to at least said roll circumferential dimension;
whereby said folded outer annular marginal portions(340) of said end cap cover elements(34) are light-tightly secured between said lateral marginal portions (20,22) of said first and second leader convolutions.

7. The method claimed in Claim 6 characterized by providing said leader(10) so that each lateral marginal portion(20,22) thereof extends inwardly from said adjacent lateral edge(16,18) by an amount at least as great as the radial extent of said outer annular marginal portion(340) of each end cap cover element(34).

8. The method claimed in claim 7 further including providing said recess in each lateral marginal portion so that said recess extends inwardly through said lateral marginal portion at least to said medial portion.

9. The method claimed in claim 6 including providing said recess in each lateral marginal portion so that said recess extends inwardly from said lateral edge by an amount greater than the radial extent of said outer annular marginal portion of each end cap cover element.

10. The method claimed in claim 6 including providing each end cap cover element so that said inner annular marginal portion thereof has means for facilitating the folding of that portion axially inwardly inside one of said core ends and the sealing of that portion to said inner circumferential surface thereof.

11. The method claimed in claim 10 further including providing said inner annular marginal portion so that said facilitating means includes a plurality of substantially radial lines of weakness therein.

12. The method claimed in claim 10 further including providing said inner annular marginal portion so that said facilitating means includes a plurality of substantially radial lines of cleavage dividing that portion into separately foldable and sealable segments.

13. The method claimed in claim 12 further including providing said facilitating means by die-cutting said lines of cleavage through said inner annular marginal portion.

14. The method claimed in claim 6 further comprising the step of removably securing said leader leading end to an adjacent portion of said second leader convolution.

15. The method claimed in claim 14 wherein said securing step includes adhesively securing said leading end to said portion of said second convolution.

## Patentansprüche

1. Verpackung zum lichtdichten Umschließen einer Rolle (R) lichtempfindlichen Materials (W), die leicht geöffnet werden kann, um das Material in entsprechenden Geräten abzuwickeln, wobei die Rolle (R) aus einem langgestreckten lichtempfindlichen Band (W) vorgegebener Breite (Ww) besteht, das der Länge nach um einen hohlen, zylindrischen Kern (C) gewickelt ist und in einem ganz außen liegenden Abschnitt (We) endet, wobei das derart um den Kern (C) gewickelte Band eine diametrale und eine Umfangsabmessung (Rd/Rc) sowie eine Umfangsfläche und gegenüberliegende Stirnflächen (Rcs,Res) definiert, wobei der Kern gegenüberliegende, offene Endabschnitte (Ce) aufweist, die dazwischen eine im wesentlichen der vorgegebenen Breite (Ww) des Bandes entsprechende Axiallänge (Cl) definieren, und wobei jeder der Endabschnitte des Kerns einen Innendurchmesser (Cd) aufweist, der eine innere Umfangsfläche (Ccs) definiert, welche sich von den Endabschnitten axial nach innen erstreckt, wobei die Verpackung
- einen biegsamen, lichtundurchlässigen Vorspann (10), aufweist der ein Vorlauf- und Nachlaufende (12, 14) umfaßt und dazwischenliegend eine mindestens zweimal der Umfangsabmessung (Rc) der Rolle entsprechende Länge (101) definiert, und der gegenüberliegende Seitenkanten (16, 18) umfaßt, die dazwischen eine im wesentlichen der vorgegebenen Breite (Ww) des Bandes (W) entsprechende Vorspannbreite (10w) bilden, wobei der Vorspann (10) gegenüberliegende, seitliche Randbereiche (20, 22) aufweist, die sich jeweils längsseits und innerhalb der gegenüberliegenden Seitenkanten (16, 18) erstrecken, sowie einen Mittelabschnitt (24), der sich longitudinal zwischen den seitlichen Randbereichen (20, 22) erstreckt, wobei das Nachlaufende (14) des Vorspanns mit dem ganz außen liegenden Ende (We) des Bandes verbunden ist und der Vorspann (10) der Länge nach um die Umfangsfläche (Rcs) der Rolle in zumindest einer ersten und zweiten, am Nachlaufende (14) beginnenden und am Vorlaufende (12) endenden Wicklung gewickelt ist, wobei die seitlichen Randbereiche (20, 22) des Vorspanns jeweils eine Einkerbung (26, 28) aufweisen, die sich von der jeweiligen Seitenkante (16, 18) des Vorspanns nach innen erstreckt und vom Nachlaufende (14) des Vorspanns im wesentlichen durch die Umfangsabmessung (Rc) der Rolle beabstandet ist, so daß die jeweilige Einkerbung (26, 28) in den seitlichen Randbereichen (20, 22) an einer Stelle des Umfangs liegt, an der die erste und zweite Wicklung des Vorspanns endet bzw. beginnt;
- zwei faltbare, scheibenförmige Abschlußkappen (30), welche jeweils die gegenüberliegenden Endflächen der Rolle bedecken, eine mittig angeordnete, runde Öffnung (32) mit einem Durchmesser (32d), der geringer als der Innendurchmesser (Cd) des Kerns ist, und ein ringförmiges, lichtundurchlässiges Abdeckelement (34) aufweisen, das die Öffnung (32) umgibt und sich von der Öffnung radial nach außen bis zu einem kreisförmigen Rand (34p) mit einem Durchmesser (34pd) erstreckt, der größer als die diametrale Abmessung (Rd) der Rolle ist, wobei das Abdeckelement (34) einen inneren ringförmigen Randbereich (34i) aufweist, der sich von der Öffnung (32) so weit radial nach außen erstreckt, daß er im wesentlichen dem Innendurchmesser (Cd) des Kerns entspricht, sowie einen äußeren ringförmigen Randbereich (34o), der sich vom Rand (34p) so weit radial nach innen erstreckt, daß er im wesentlichen der diametralen Abmessung (Rd) der Rolle entspricht;
- wobei jede der Abschlußkappen (30) so angeordnet ist, daß sie jeweils die gegenüberliegenden Stirnflächen (Res) der Rolle im wesentlichen konzentrisch abdecken, wobei der innere ringförmige Randbereich (34i) jedes Abdeckelements (34) der Abschlußkappen jeweils innerhalb der Endabschnitte (Ce) des Kerns axial nach innen gefaltet und mit der inneren Umfangsfläche (Ccs) verbunden ist, wobei der äußere ringförmige Randbereich (34o) jedes Abdeckelements (34) der Abschlußkappen jeweils an den Stirnflächen (Res) der Rolle axial nach innen und auf den jeweiligen seitlichen Vorspann-Randbereich (20, 22) der ersten Vorspannwicklung radial nach innen gefaltet ist, wobei die Einkerbung (26, 28) in jedem der seitlichen Randbereiche (20, 22) dem Mittelabschnitt (24) des Vorspanns den erforderlichen Spielraum gibt, sich zwischen den gefalteten, äußeren ringförmigen Randbereichen (340) an der Stelle, an der die erste und zweite Vorspannwicklung endet bzw. beginnt, hindurchzubewegen, und dadurch die seitlichen Randbereiche (20, 22) der zweiten Vorspannwicklung auf die gefalteten, äußeren ringförmigen Randbereiche (340) gewickelt werden können, wodurch die Randbereiche (340) der Abdeckelemente (34) der Abschlußkappen zwischen den seitlichen Randbereichen (20, 22) der ersten und zweiten Vorspannwicklung lichtdicht eingebracht sind.

2. Verpackung nach Anspruch 1, dadurch gekennzeichnet, daß sich jeder seitliche Randbereich (20, 22) des Vorspanns (10) von der jeweiligen Seitenkante (16, 18) um einen Betrag nach innen erstreckt, der mindestens der radialen Ausdehnung des äußeren ringförmigen Randbereichs (340) jedes Abdeckelements (34) der Abschlußkappen entspricht.

3. Verpackung nach Anspruch 1, dadurch gekennzeichnet, daß sich die Einkerbung (26, 28) in jedem seitlichen Randbereich (20, 22) von der Seitenkante (16, 18) um einen Betrag nach innen erstreckt, der größer als die radiale Ausdehnung des äußeren ringförmigen Randbereichs (340) jedes Abdeckelements (34) der Abschlußkappen ist.

4. Verpackung nach Anspruch 1, dadurch gekennzeichnet, daß der innere ringförmige Randbereich (34i) jedes Abdeckelements (34) der Abschlußkappen ein Mittel aufweist, welches das Falten dieses Bereichs innerhalb eines der Endabschnitte (Ce) des Kerns axial nach innen und das Verbinden des Bereichs mit der inneren Umfangsfläche (Rcs) erleichtert.

5. Verpackung nach Anspruch 1, gekennzeichnet durch ein Mittel zum lösbaren Befestigen des Vorlaufendes (12) des Vorspanns (10) an einem Teil der zweiten Vorspannwicklung.

6. Verfahren zum lichtdichten Umschließen einer Rolle (R) lichtempfindlichen Materials (W) mit einer Verpackung, die leicht geöffnet werden kann, um das Material in entsprechenden Geräten abzuwickeln, wobei die Rolle (R) aus einem langgestreckten lichtempfindlichen Band (W) vorgegebener Breite (Ww) besteht, das der Länge nach um einen hohlen, zylindrischen Kern (C) gewickelt ist und in einem ganz außen liegenden Abschnitt (We) endet, wobei das derart um den Kern (C) gewickelte Band eine diametrale und eine Umfangsabmessung (Rd/Rc) sowie eine Umfangsfläche und gegenüberliegende Stirnflächen (Rcs,Res) definiert, wobei der Kern gegenüberliegende, offene Endabschnitte (Ce) aufweist, die dazwischen eine im wesentlichen der vorgegebenen Breite (Ww) des Bandes entsprechende Axiallänge (Cl) definieren, und wobei jeder der Endabschnitte des Kerns einen Innendurchmesser (Cd) aufweist, der eine innere Umfangsfläche (Ccs) definiert, welche sich von den Endabschnitten axial nach innen erstreckt,
gekennzeichnet durch folgende Schritte:
- Bereitstellen eines biegsamen, lichtundurchlässigen Vorspanns (10), der ein Vorlauf- und Nachlaufende (12, 14) aufweist und dazwischenliegend eine mindestens zweimal der Umfangsabmessung (Rc) der Rolle entsprechende Länge (101) definiert, und der gegenüberliegende Seitenkanten (16, 18) aufweist, die dazwischen eine im wesentlichen der vorgegebenen Breite (Ww) des Bandes (W) entsprechende Vorspannbreite (10w) bilden, wobei der Vorspann (10) gegenüberliegende, seitliche Randbereiche (20, 22) aufweist, die sich jeweils längsseits und innerhalb der gegenüberliegenden Seitenkanten (16, 18) erstrecken, sowie einen Mittelabschnitt (24), der sich longitudinal zwischen den seitlichen Randbereichen (20, 22) erstreckt;
- Vornehmen einer Einkerbung (26, 28) in jedem der seitlichen Randbereiche (20, 22), die sich von der jeweiligen Seitenkante (16, 18) nach innen erstreckt und vom Nachlaufende (14) im wesentlichen durch die Umfangsabmessung (Rc) der Rolle beabstandet ist;
- Verbinden des Nachlaufendes (14) mit dem ganz außen liegenden Ende (We) des Bandes;
- Wickeln eines ersten Abschnitts (101a) des Vorspanns (10) der Länge nach um die Umfangsfläche (Rcs) der Rolle in einer am Nachlaufende (14) beginnenden und an den Einkerbungen (26, 28) in den seitlichen Randbereichen (20, 22) endenden ersten Wicklung des Vorspanns, wobei ein zweiter, noch unaufgewickelter Abschnitt (101b) des Vorspanns (10) verbleibt;
- Bereitstellen von zwei faltbaren, scheibenförmigen, lichtundurchlässigen Abschlußkappen (30), weche jeweils die gegenüberliegenden Endflächen (Res) der Rolle bedecken, eine mittig angeordnete, runde Öffnung (32) mit einem Durchmesser (32d), der geringer als der Innendurchmesser (Cd) des Kerns ist, und ein ringförmiges, lichtundurchlässiges Abdeckelement (34) aufweisen, das die Öffnung (32) umgibt und sich von der Öffnung radial nach außen bis zu einem kreisförmigen Rand (34p) mit einem Durchmesser (34pd) erstreckt, der größer als die diametrale Abmessung (Rd) der Rolle ist, wobei das Abdeckelement (34) einen inneren ringförmigen Randbereich (34i) aufweist, der sich von der Öffnung (32) so weit radial nach außen erstreckt, daß er im wesentlichen dem Innendurchmesser (Cd) des Kerns entspricht, sowie einen äußeren ringförmigen Randbereich (34o), der sich vom Rand (34p) so weit radial nach innen erstreckt, daß er im wesentlichen der diametralen Abmessung (Rd) der Rolle entspricht;
- Verbringen jeder der Abschlußkappen (30) in eine Position, so daß sie jeweils die gegenüberliegenden Stirnflächen (Res) der Rolle im wesentlichen konzentrisch abdecken;
- Falten des inneren ringförmigen Randbereichs (34i) jedes Abdeckelements (34) der Abschlußkappen jeweils innerhalb der Endabschnitte (Ce) des Kerns axial nach innen und Verbinden des somit gefalteten Bereichs mit der inneren Umfangsfläche (Ccs);
- Falten des äußeren ringförmigen Randbereichs (340) jedes Abdeckelements (34) der Abschlußkappen jeweils an den Stirnflächen (Res) der Rolle axial nach innen und auf den jeweiligen seitlichen Vorspann-Randbereich (20, 22) der ersten Vorspannwicklung radial nach innen, wobei die Einkerbung (26, 28) in jedem der seitlichen Randbereiche (20, 22) dem Mittelabschnitt (24) des Vorspanns den erforderlichen Spielraum gibt, sich zwischen den gefalteten, äußeren ringförmigen Randbereichen (340) an der Stelle, an der die erste Vorspannwicklung endet, hindurchzubewegen; und
- Wickeln des zweiten Abschnitts (101b) des Vorspanns (10) der Länge nach um die gefalteten, äußeren ringförmigen Randbereiche (34o) und den dazwischenliegenden Mittelabschnitt (24) der ersten Vorspannwicklung in einer zweiten Wicklung des Vorspanns, die an den Einkerbungen (26, 28) beginnt und nach einer Umfangslänge, die mindestens der Umfangsabmessung der Rolle entspricht, endet;
- wodurch die Randbereiche (34o) der Abdeckelemente (34) der Abschlußkappen zwischen den seitlichen Randbereichen (20, 22) der ersten und zweiten Vorspannwicklung lichtdicht eingebracht werden.

7. Verfahren nach Anspruch 6, gekennzeichnet durch das Bereitstellen des Vorspanns (10) derart, daß sich jeder seitliche Randbereich (20, 22) von der jeweiligen Seitenkante (16, 18) um einen Betrag nach innen erstreckt, der mindestens der radialen Ausdehnung des äußeren ringförmigen Randbereichs (34o) jedes Abdeckelements (34) der Abschlußkappen entspricht.

8. Verfahren nach Anspruch 7, gekennzeichnet durch das Vornehmen der Einkerbung in jedem seitlichen Randbereich derart, daß sich die Einkerbung nach innen durch den seitlichen Randbereich hindurch bis mindestens zum Mittelabschnitt des Vorspanns erstreckt.

9. Verfahren nach Anspruch 6, gekennzeichnet durch das Vornehmen der Einkerbung in jedem seitlichen Randbereich derart, daß sich die Einkerbung von der Seitenkante um einen Betrag nach innen erstreckt, der größer als die radiale Ausdehnung des äußeren ringförmigen Randbereichs jedes Abdeckelements (34) der Abschlußkappen ist.

10. Verfahren nach Anspruch 6, gekennzeichnet durch das Bereitstellen jedes Abdeckelements der Abschlußkappen derart, daß der innere ringförmige Randbereich ein Mittel aufweist, welches das Falten dieses Bereichs innerhalb eines der Endabschnitte des Kerns axial nach innen und das Verbinden des Bereichs mit der inneren Umfangsfläche erleichtert.

11. Verfahren nach Anspruch 10, gekennzeichnet durch das Bereitstellen des inneren ringförmigen Randbereichs derart, daß das Erleichterungsmittel eine Vielzahl von im wesentlichen radial verlaufenden Schwächungslinien aufweist.

12. Verfahren nach Anspruch 10, gekennzeichnet durch das Bereitstellen des inneren ringförmigen Randbereichs derart, daß das Erleichterungsmittel eine Vielzahl von im wesentlichen radial verlaufenden Schwächungslinien aufweist, welche diesen Bereich in getrennt faltbare und verbindbare Segmente aufteilt.

13. Verfahren nach Anspruch 12, gekennzeichnet durch das Bereitstellen des Erleichterungsmittels derart, daß man die Spaltlinien in den inneren ringförmigen Randbereich einstanzt.

14. Verfahren nach Anspruch 6, gekennzeichnet durch folgenden Schritt:
- Lösbar befestigen des Vorlaufendes des Vorspanns an einem Teil der zweiten Vorspannwicklung.

15. Verfahren nach Anspruch 14, dadurch gekennzeichnet, daß der Befestigungsschritt das Verkleben des Vorlaufendes mit dem Teil der zweiten Wicklung beinhaltet.

## Revendications

1. Emballage destiné à enfermer de façon étanche à la lumière un rouleau (R) de matériau photosensible (W) et conçu de façon à être facile à ouvrir pour délivrer un tel matériau à un appareil associé, ledit rouleau (R) comprenant une bande photosensible allongée (W) de largeur prédéterminée (Ww) enroulée longitudinalement autour d'un mandrin cylindrique creux (C) et se terminant par une extrémité extérieure (We) de celle-ci, ladite bande ainsi enroulée autour dudit mandrin (C) définissant des dimensions diamétrale et circonférentielle (Rd/Rc) et des surfaces circonférentielle et d'extrémités opposées (Rcs, Res) dudit rouleau, ledit mandrin comportant des extrémités ouvertes opposées (Ce) définissant entre elles une longueur axiale (C1) pratiquement égale à ladite largeur prédéterminée (Ww) de la bande, chacune desdites extrémités du mandrin présentant un diamètre intérieur (Cd) définissant une surface circonférentielle intérieure (Ccs) qui s'étend axialement vers l'intérieur à partir de celle-ci, dans lequel
une amorce opaque souple (10), comportant des extrémités avant et arrière (12, 14) qui définissent entre elles une longueur longitudinale (101) égale au moins au double de ladite dimension circonférentielle (Rc) du rouleau, et comportant des bords latéraux opposés (16, 18) définissant entre eux une largeur de l'amorce (10w) pratiquement égale à la largeur prédéterminée (Ww) de ladite bande (W), ladite amorce (10) comportant des parties de marge latérale opposées (20, 22) qui s'étendent longitudinalement le long desdits bords latéraux opposés (16, 18), respectivement, et vers l'intérieur de ceux-ci, et une partie médiane (24) qui s'étend longitudinalement entre lesdites parties de marge latérale (20, 22), ladite extrémité arrière de l'amorce (14) étant réunie à ladite extrémité extérieure de la bande (We), ladite amorce (10) étant enroulée longitudinalement autour de ladite surface circonférentielle (Rcs) du rouleau sur au moins des première et seconde spires de celle-ci commençant au niveau de ladite extrémité arrière (14) et se terminant au niveau de ladite extrémité avant (12), lesdites parties de marge latérale de l'amorce (20, 22) comportant chacune un évidement (26, 28) qui s'étend vers l'intérieur dans celles-ci à partir du bord adjacent desdits bords latéraux de l'amorce (16, 18) et est espacé longitudinalement de ladite extrémité arrière (14) de l'amorce par pratiquement ladite dimension circonférentielle du rouleau (Rc), de sorte que ledit évidement (26, 28) de chacune desdites parties de marge latérale (20, 22) est situé sur la circonférence au niveau d'un emplacement où lesdites première et seconde spires de l'amorce se terminent et commencent, respectivement,
une paire d'embouts pliables en forme de disque (30) qui sont conçus pour recouvrir lesdites surfaces d'extrémités opposées du rouleau, respectivement, chacun desdits embouts (30) comprenant une ouverture centrale ronde (32) présentant un diamètre (32d) inférieur audit diamètre intérieur (Cd) du mandrin et un élément de couverture opaque annulaire (34) qui entoure ladite ouverture (32), ledit élément de couverture (34) s'étendant radialement vers l'extérieur à partir de ladite ouverture jusqu'à une périphérie circulaire (34p) qui présente un diamètre (34pd) supérieur à ladite dimension diamétrale (Rd) du rouleau, ledit élément de couverture (34) comportant une partie de bord annulaire intérieur (34i) qui s'étend radialement vers l'extérieur à partir de ladite ouverture (32) sur une étendue correspondant pratiquement audit diamètre intérieur (Cd) du mandrin et une partie de bord annulaire extérieur (340) qui s'étend radialement vers l'intérieur à partir de ladite périphérie (34p) sur une étendue correspondant pratiquement à ladite dimension diamétrale (Rd) du rouleau,
chacun desdits embouts (30) étant placé en relation de couverture pratiquement concentrique par rapport à l'une respective desdites surfaces d'extrémités opposées du rouleau (Res), ladite partie de bord annulaire intérieur (34i) de l'élément de couverture (34) de chaque embout étant repliée axialement vers l'intérieur à l'intérieur d'une extrémité respective desdites extrémités du mandrin (Ce) et étant scellée sur ladite surface circonférentielle intérieure (Ccs) de celle-ci, ladite partie de bord annulaire extérieur (340) de l'élément de couverture (34) de chaque embout étant repliée axialement vers l'intérieur de l'une respective desdites surfaces d'extrémité (Res) du rouleau et radialement vers l'intérieur sur la partie adjacente parmi lesdites parties de marge latérale (20, 22) de l'amorce de ladite première spire de l'amorce, ledit évidement (26, 28) ménagé dans chacune desdites parties de marge latérale (20, 22) procurant l'espace nécessaire à ladite partie médiane (24) de l'amorce pour qu'elle passe entre lesdites parties de bord annulaire extérieur repliées (340) au niveau dudit emplacement où lesdites première et seconde spires de l'amorce se terminent et commencent, respectivement, en permettant ainsi que lesdites parties de marge latérale (340) de ladite seconde spire de l'amorce soient enroulées sur les parties de bord annulaire extérieur repliées (340), grâce à quoi lesdites parties de bord annulaire extérieur repliées desdits éléments de couverture (34) des embouts sont fixées de façon étanche à la lumière entre lesdites parties de marge latérale (20, 22) desdites première et seconde spires de l'amorce.

2. Emballage selon la revendication 1, caractérisé en ce que chaque partie de marge latérale (20, 22) de ladite amorce (10) s'étend vers l'intérieur à partir dudit bord latéral adjacent (16, 18) d'une quantité au moins aussi importante que l'étendue radiale de ladite partie de bord annulaire extérieur (340) de chaque élément de couverture (34) d'embout.

3. Emballage selon la revendication 1, caractérisé en ce que ledit évidement (26, 28) de chaque partie de marge latérale (20, 22) s'étend vers l'intérieur à partir dudit bord latéral (16, 18) d'une quantité supérieure à l'étendue radiale de ladite partie de bord annulaire extérieur (340) de chaque élément de couverture (34) d'embout.

4. Emballage selon la revendication 1, caractérisé en ce que ladite partie de bord annulaire intérieur (34i) de chaque élément de couverture (34) d'embout comprend un moyen destiné à faciliter le pliage de cette partie axialement vers l'intérieur dans l'une desdites extrémités (Ce) du mandrin et le scellage de cette partie sur la surface circonférentielle intérieure (Rcs) de celle-ci.

5. Emballage selon la revendication 1, caractérisé en ce qu'il comprend un moyen permettant de fixer de façon amovible l'extrémité avant (12) de ladite amorce (10) à une partie adjacente de ladite seconde spire de l'amorce.

6. Procédé permettant d'enfermer de façon étanche à la lumière un rouleau (R) de matériau photosensible (W) dans un emballage qui peut facilement être ouvert pour délivrer un tel matériau à un appareil associé, ledit rouleau comprenant une bande photosensible allongée d'une largeur prédéterminée (Ww) enroulée longitudinalement autour d'un mandrin cylindrique creux (C) et se terminant par une extrémité extérieure (We) de celle-ci, ladite bande ainsi enroulée autour dudit mandrin (C) définissant des dimensions diamétrale et circonférentielle (Rd/Rc) et des surfaces circonférentielle et d'extrémités opposées (Rcs, Res) dudit rouleau, ledit mandrin comportant des extrémités ouvertes opposées (Ce) définissant entre elles une longueur axiale (C1) pratiquement égale à ladite largeur prédéterminée (Ww) de la bande, chacune desdites extrémités du mandrin présentant un diamètre intérieur (Cd) qui définit une surface circonférentielle intérieure (Ccs) s'étendant axialement vers l'intérieur à partir de celle-ci, le procédé comprenant les étapes suivantes :
procurer une amorce opaque souple (10) comportant des extrémités avant et arrière (12, 14) définissant entre elles une dimension longitudinale (10e) égale au moins au double de ladite dimension circonférentielle (Rc) du rouleau, et comportant des bords latéraux opposés (16, 18) définissant entre eux une largeur de l'amorce (10w) pratiquement égale à ladite largeur prédéterminée (Ww) de la bande, ladite amorce (10) comportant des parties de marge latérale opposées (20, 22) qui s'étendent longitudinalement le long desdits bords latéraux opposés (16, 18), respectivement, et vers l'intérieur de ceux-ci, et une partie médiane (24) qui s'étend longitudinalement entre lesdites parties de marge latérale (20, 22),
ménager dans chacune desdites parties de marge latérale (20, 22) un évidement (26, 28) qui s'étend vers l'intérieur à partir du bord adjacent desdits bords latéraux (16, 18) et qui est espacé longitudinalement de ladite extrémité arrière (14) par pratiquement ladite dimension circonférentielle (Rc) du rouleau,
réunir ladite extrémité arrière (14) à ladite extrémité extérieure (We) de la bande,
enrouler une première étendue (101a) de ladite amorce (10) longitudinalement autour de ladite surface circonférentielle (Rcs) du rouleau sur une première spire de ladite amorce commençant au niveau de ladite extrémité arrière (14) et se terminant au niveau desdits évidements (26, 28) dans lesdites parties de marge latérale (20, 22), en laissant une seconde étendue (101b) de ladite amorce (10) pas encore enroulée,
procurer une paire d'embouts opaques pliables, en forme de disque (30) conçus pour recouvrir lesdites surfaces d'extrémités opposées (Res) du rouleau, respectivement, chacun desdits embouts (30) comprenant une ouverture centrale ronde (32) présentant un diamètre (32d) inférieur audit diamètre intérieur (Cd) du mandrin, et un élément de couverture opaque annulaire (34) entourant ladite ouverture (32) et s'étendant radialement vers l'extérieur à partir de celle-ci jusqu'à une périphérie circulaire (34p) présentant un diamètre (34pd) supérieur à ladite dimension diamétrale (Rd) du rouleau, ledit élément de couverture (34) comportant une partie de bord annulaire intérieur (34i) qui s'étend radialement vers l'extérieur à partir de ladite ouverture (32) sur une étendue correspondant pratiquement audit diamètre intérieur (Cd) du rouleau et une partie de bord annulaire extérieur (340) qui s'étend radialement vers l'intérieur à partir de ladite périphérie (34p) sur une étendue correspondant pratiquement à ladite dimension diamétrale (Rd) du rouleau,
placer chacun desdits embouts (30) en relation de couverture pratiquement concentrique par rapport à l'une respective desdites surfaces d'extrémités opposées (Res) du rouleau,
replier ladite partie de bord annulaire intérieur (34i) de l'élément de couverture (34) de chaque embout axialement vers l'intérieur dans l'une respective desdites extrémités (Ce) du mandrin, et sceller cette partie, ainsi repliée, sur ladite surface circonférentielle intérieure (Ccs) de celle-ci,
replier ladite partie de bord annulaire extérieur (340) de l'élément de couverture (34) de chaque embout axialement vers l'intérieur de l'une respective desdites surfaces d'extrémité (Res) du rouleau et radialement vers l'intérieur sur l'une adjacente desdites parties de marge latérale de l'amorce (20, 22) de ladite première spire de l'amorce, lesdits évidements (26, 28) dans lesdites parties de marge latérale (20, 22) ménageant entre eux l'espace nécessaire à ladite partie médiane (24) de l'amorce pour qu'elle passe entre lesdites parties de bord annulaire extérieur repliées (340) là où se termine ladite première spire de l'amorce, et
enrouler ladite seconde étendue (101b) de ladite amorce (10) longitudinalement autour desdites parties de bord annulaire extérieur repliées (340) et de ladite partie médiane (24) de ladite première spire de l'amorce située entre elles, sur une seconde spire de ladite amorce commençant au niveau desdits évidements (26, 28) et se terminant à une distance suivant la circonférence au-delà de ceux-ci égale au moins à ladite dimension circonférentielle du rouleau,
grâce à quoi lesdites parties de bord annulaire extérieur repliées (340) desdits éléments de couverture (34) des embouts sont fixées de façon étanche à la lumière entre lesdites parties de marge latérale (20, 22) desdites première et seconde spires de l'amorce.

7. Procédé selon la revendication 6, caractérisé par l'agencement de ladite amorce (10) de façon que chaque partie de marge latérale (20, 22) de celle-ci s'étende vers l'intérieur à partir dudit bord latéral (16, 18) adjacent d'une quantité au moins aussi importante que l'étendue radiale de ladite partie de bord annulaire extérieur (340) de l'élément de couverture (34) de chaque embout.

8. Procédé selon la revendication 7, comprenant en outre l'agencement dudit évidement dans chaque partie de marge latérale de façon que ledit évidement s'étende vers l'intérieur à travers ladite partie de marge latérale au moins jusqu'à ladite partie médiane.

9. Procédé selon la revendication 6, comprenant l'agencement dudit évidement dans chaque partie de marge latérale de façon que ledit évidement s'étende vers l'intérieur à partir dudit bord latéral d'une quantité supérieure à l'étendue radiale de ladite partie de bord annulaire extérieur de l'élément de couverture de chaque embout.

10. Procédé selon la revendication 6, comprenant l'agencement de l'élément de couverture de chaque embout de façon que ladite partie de bord annulaire intérieur de celui-ci comporte un moyen facilitant le pliage de cette partie axialement vers l'intérieur dans l'une desdites extrémités du mandrin, ainsi que le scellage de cette partie sur ladite surface circonférentielle intérieure de ceux-ci.

11. Procédé selon la revendication 10, comprenant en outre l'agencement de ladite partie de bord annulaire intérieur de façon que ledit moyen qui facilite comprenne, dans celui-ci une pluralité de lignes de faiblesse pratiquement radiales.

12. Procédé selon la revendication 10, comprenant en outre l'agencement de ladite partie de bord annulaire intérieur de façon que ledit moyen qui facilite, comprenne une pluralité de lignes de séparation pratiquement radiales divisant cette partie en segments pliables et scellables séparément.

13. Procédé selon la revendication 12, comprenant en outre l'agencement dudit moyen qui facilite en découpant à l'emporte-pièce lesdites lignes de séparation à travers ladite partie de bord annulaire intérieur.

14. Procédé selon la revendication 6, comprenant en outre l'étape consistant à fixer de façon amovible ladite extrémité avant de l'amorce à une partie adjacente de ladite seconde spire de l'amorce.

15. Procédé selon la revendication 14, dans lequel ladite étape de fixation comprend la fixation par adhésif de ladite extrémité avant à ladite partie de ladite seconde spire.
